# EUROPEAN PATENT APPLICATION

(11) **EP 1 619 683 A2**
(43) Date of publication of application: **25.01.2006**
(21) Application number: 05014784.2
(22) Date of filing: 07.07.2005
(51) Int. Cl.: G11B 20/10, G11C 7/16, G11B 27/00

(54) **Electronic apparatus**

(30) Priority: 09.07.2004 JP 2004203576
(71) Applicant: SONY CORPORATION, Tokyo 141 (JP)
(72) Inventor: Satomi, Kiyoshi, Shinagawa-ku Tokyo (JP); Ando, Yoshinori, Shinagawa-ku Tokyo (JP)
(74) Representative: Körber, Martin Hans

(57) **Abstract**

An electronic apparatus (1) capable of performing processing of writing input content data to a memory means (17), then, reading and decoding the same with a smaller power consumption comparing with that in the related art is provided; wherein a USB control portion (12) writes song data input from a PC interface (10) to a HDD (17) via a data transfer bus (51), and a gate array (18) reads song data to be reproduced from the HDD (17) via the data transfer bus and outputs to a decoder (22).

## Description

### CROSS REFERENCES TO RELATED APPLICATIONS

The present invention contains subject matter related to Japanese Patent Application JP 2004-203576 filed in the Japanese Patent Office on July 9, 2004, the entire contents of which being incorporated herein by reference.

### BACKGROUND OF THE INVENTION

### 1. Field of the Invention

The present invention relates to an electronic apparatus for storing input content data in a memory means, then, reproducing and outputting the same.

### 2. Description of the Related Art

In recent years, due to recording media becoming large in capacity and development of compression techniques for music, moving pictures and still images, etc., it is possible to store enormous amounts of content data in a recording medium in a portable and other type of reproducing apparatus.

Such a reproducing apparatus receives content data, for example, from a personal computer in a state of being connected to the personal computer and stores the same in the recording medium.

Also, the reproducing apparatus performs processing of reading content data from recording media, decoding the same and outputting as audio and video in response to an operation signal.

In the above reproducing apparatus of the related art, an operation of writing content data input from a personal computer to a recording medium, an operation of reading content data from the recording medium at the time of reproducing, and other control of the reproducing apparatus are performed integrally by one CPU.

[Patent Article 1] The Japanese Unexamined Patent Publication No. 2003-132660

### SUMMARY OF THE INVENTION

However, in the reproducing apparatus explained above, an amount of processing by the CPU is large and it is necessary to use a CPU with a high operation frequency.

Therefore, the above reproducing apparatus has a disadvantage that the power consumption is too high to use it as a portable apparatus.

It is desired to provide an electronic apparatus capable of performing processing of writing input content data to a memory means, then, reading and reproducing the same with a smaller power consumption comparing with that in the related art.

To solve the above disadvantages of the related art explained above, according to a first invention, there is provided an electronic apparatus, having an interface for receiving content data; a memory means connected to a data transfer bus, for storing the content data; a first control circuit for writing content data input via the interface to the memory means via the data transfer bus; a reproduction circuit for reproducing the content data; a second control circuit for reading the content data from the memory means via the data transfer bus and outputting to the reproduction circuit; and a third control circuit for performing outputting processing of the content data reproduced by the reproduction circuit.

According to a second invention, there is provided a electronic apparatus, having an interface for receiving content data; a memory means connected to a data transfer bus, for storing the content data; a first control circuit for writing content data input via the interface to the memory means; a reproduction circuit for reproducing the content data; a second control circuit for reading the content data from the memory means and outputting the same to the reproduction circuit; and a third control circuit for performing outputting processing of the content data reproduced by the reproduction circuit; wherein the third control circuit makes the first control circuit to be in a driving state and makes the second control circuit to be in a non-driving state when receiving the content data via the interface, and makes the reproduction circuit and the second control circuit to be in a driving state and makes the first control circuit to be in a non-driving state when reading content data from the memory means and reproducing the same.

According to the present invention, an electronic apparatus capable of performing processing of writing input content data to a memory means, then, reading and reproducing the same with a smaller power consumption comparing with that in the related art can be provided.

### BRIEF DESCRIPTION OF DRAWINGS

These and other objects and features of the present invention will become clearer from the following description of the preferred embodiments given with reference to the attached drawings, in which:
FIG. 1 is a view for explaining relationship of a portable audio reproducing apparatus and a personal computer according to an embodiment of the present invention;
FIG. 2 is a view of the configuration of the portable audio reproducing apparatus shown in FIG. 1;
FIG. 3 is a view of the configuration of a USB control portion shown in FIG. 2;
FIG. 4 is a view of an appearance of the portable audio reproducing apparatus shown in FIG. 1;
FIG. 5 is a view for explaining various screens displayed on the portable audio reproducing apparatus shown in FIG. 2;
FIG. 6 is a view of the configuration of a gate array of the portable audio reproducing apparatus shown in FIG. 1;
FIG. 7 is a view of the configuration of a microcomputer of the portable audio reproducing apparatus shown in FIG. 1;
FIG. 8 is a disassembled perspective view of a part of the portable audio reproducing apparatus shown in FIG. 1;
FIG. 9 is a view for explaining shifts of a song select screen displayed on an LCD of the portable audio reproducing apparatus shown in FIG. 2; and
FIG. 10 is a view continued from FIG. 9, for explaining shifts of a song select screen displayed on the LCD of the portable audio reproducing apparatus shown in FIG. 2.

### DESCRIPTION OF THE PREFERRED EMBODIMENT

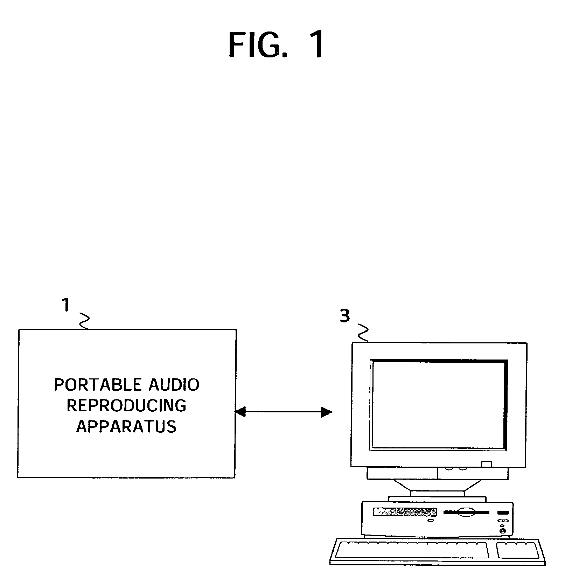

Below, an embodiment of the present invention will be explained with reference to FIG. 1 to FIG. 10.

A reproducing apparatus according to an embodiment of the present invention will be explained first.

FIG. 1 is a view for explaining relationship of a portable audio reproducing apparatus 1 and a personal computer 3 according to an embodiment of the present invention.

The portable audio reproducing apparatus 1 is connected to, for example, the personal computer 3 in a removable way.

The portable audio reproducing apparatus 1 receives as an input song data (content data) from the personal computer 3 in a state of being connected to the personal computer 3 and writes the same to a built-in HDD.

Also, the portable audio reproducing apparatus 1 decodes and reproduces the song data read from the HDD, for example, in a state of not connected to the personal computer 3.

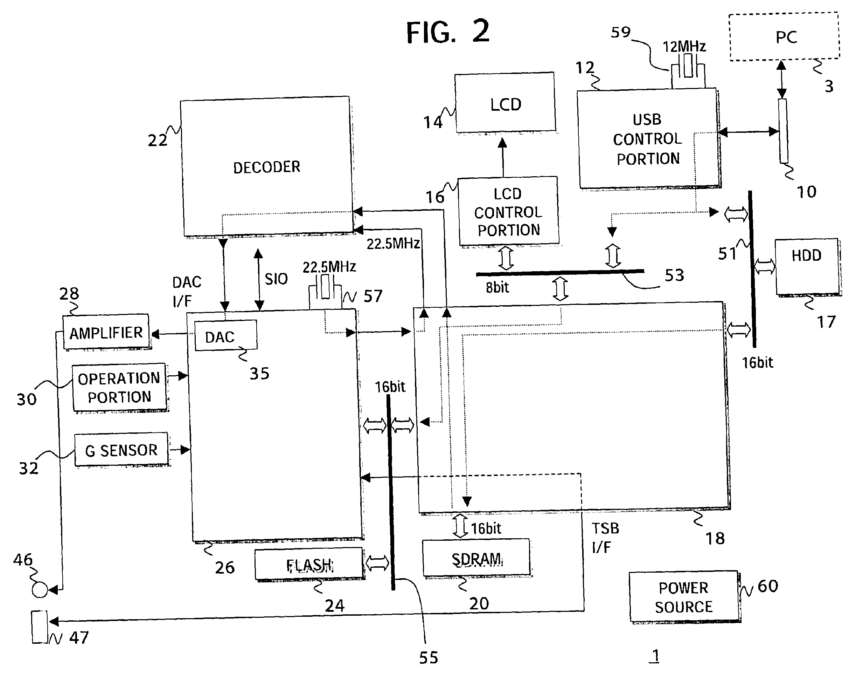

FIG. 2 is a view of the configuration of the portable audio reproducing apparatus 1 shown in FIG. 1.

As shown in FIG. 2, the portable audio reproducing apparatus 1 includes, for example, a PC interface 10, a USB (Universal Serial Bus) control portion 12, an LCD (Liquid Crystal Display) 14, an LCD control portion 16, an HDD (Hard Disk Drive) 17, a gate array 18, an SDRAM (Synchronous DRAM) 20, a decoder 22, a flash memory 24, a microcomputer 26, an amplifier 28, an operation portion 30, a G sensor 32, an audio output terminal 46, a remote controller terminal 47, a data transfer bus 51, a control bus 53, a control and data transfer bus 55, an oscillation circuit 57, an oscillation circuit 59 and a power source 60.

Below, connection relationship of the components of the portable audio reproducing apparatus 1 shown in FIG. 2 will be explained.

As shown in FIG. 2, the data transfer bus 51 is connected to the USB control portion 12, the HDD 17 and the gate array 18.

The USB control portion 12, the HDD 17 and the gate array 18 obtain right of use the data transfer bus 51 by arbitration. The right of use the data transfer bus 51 can be obtained by only one of the USB control portion 12, the HDD 17 and the gate array 18 at a time.

The control bus 53 is connected to the USB control portion 12, the LCD control portion 16 and the gate array 18.

The USB control portion 12, the LCD control portion 16 and the gate array 18 obtain right of use the control bus 53 by arbitration. The right of use the control bus 53 can be obtained by only one of the USB control portion 12, the LCD control portion 16 and the gate array 18 at a time.

The control and data transfer bus 55 is connected to the gate array 18, the flash memory 24 and the microcomputer 26.

The gate array 18 and the microcomputer 26 obtain right of use the control and data transfer bus 55 by arbitration. The right of use the control and data transfer bus 55 can be obtained by only one of the gate array 18 and the microcomputer 26 at a time.

Note that the data transfer bus 51 and the control and data transfer bus 55 are 16-bit width, and the control bus 53 is 8-bit width.

Below, the respective components shown in FIG. 2 will be explained.

### [PC Interface 10]

The PC interface 10 is connected to the personal computer 3 via a USB cable in a removable way.

The PC interface 10 receives song data from the personal computer 3 and outputs the same to the USB control portion 12 in a state of being attached with the USB cable.

### [USB control portion 12]

The USB control portion 12 writes content data input via the PC interface 10 to the HDD 17 via the data transfer bus 51.

Also, the USB control portion 12 outputs a control signal input via the PC interface 10 to the gate array 18 via the control bus 53.

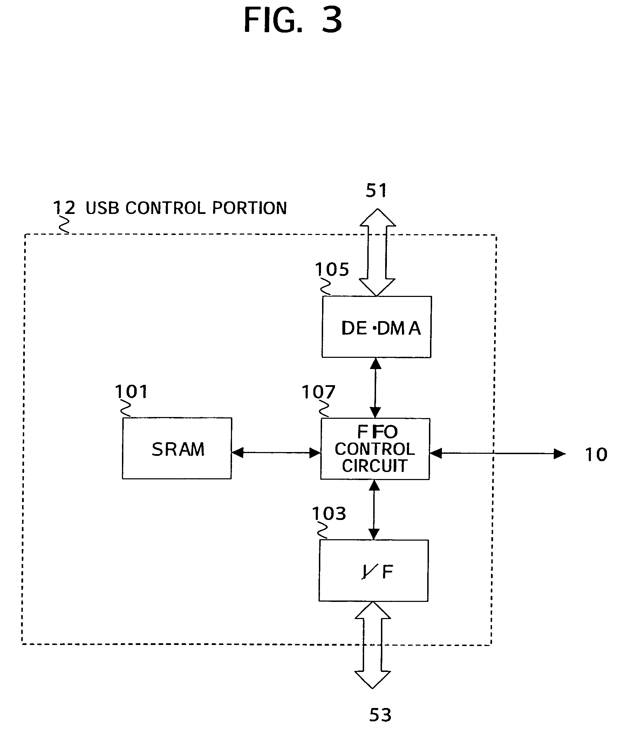

FIG. 3 is a view of the configuration of the USB control portion 12 shown in FIG. 2.

As shown in FIG. 3, the USB control portion 12 includes, for example, an SRAM 101, an interface 103, an IDE (Integrated Drive Electronics)/DMA (Direct Memory Access) 105 and a FIFO (First In First Out) control circuit 107.

The SRAM 101 temporarily stores, for example, song data input from the personal computer 3 via the PC interface 10.

The interface 103 is connected to the control bus 53.

The IDE/DMA 105 is connected to the data transfer bus 51 and controls inputting/outputting of song data between the PC interface 10 and the HDD 17.

The FIFO control circuit 107 integrally controls an operation of the USB control portion 12, which will be explained in the present embodiment.

### [LCD 14 and LCD Control Portion 16]

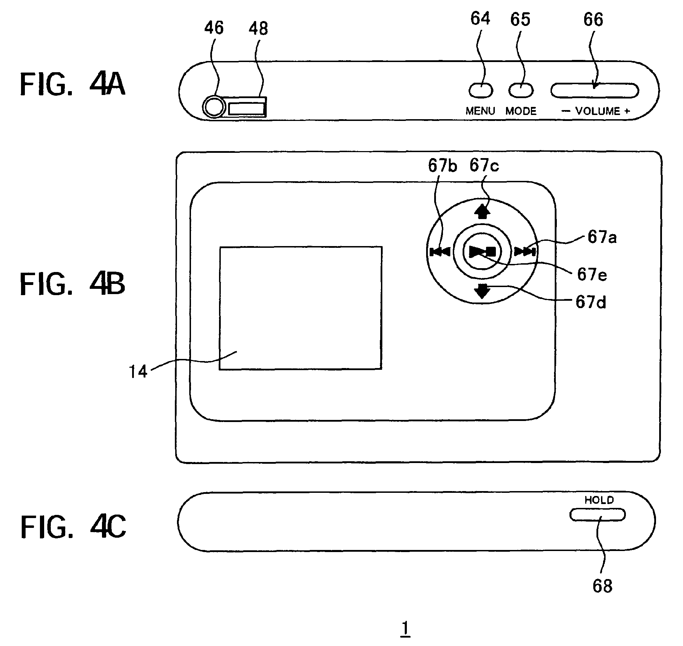

The LCD 14 is provided, for example as shown in FIG. 4, on the surface side of a chassis of the portable audio reproducing apparatus 1.

The LCD control portion 16 displays a predetermined screen on the LCD 14 based on a display control signal input from the microcomputer 26 via the control and data transfer bus 55, the gate array 18 and the control bus 53.

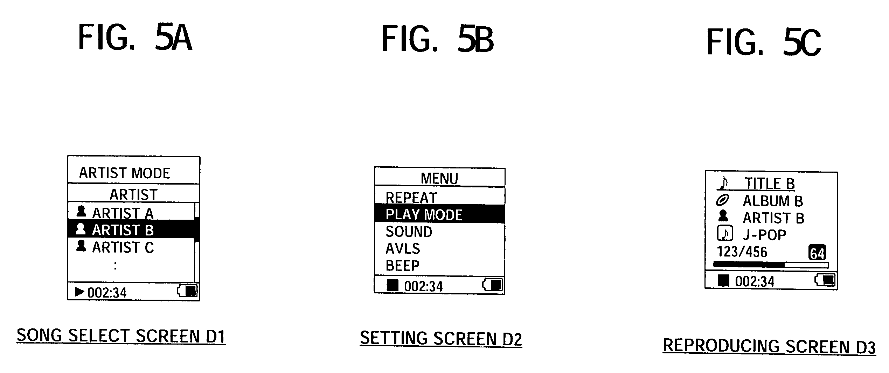

The LCD control portion 16 displays on the LCD 14, for example, a song select screen D1 shown in FIG. 5A, a setting screen shown in FIG. 5B and a reproduction screen shown in FIG. 5C.

### [HDD17]

The HDD 17 has a memory capacity of, for example, 20 GB and is capable of storing song data of about 10000 songs (an amount of 700 compact disks) compressed by the ATRAC (Adaptive Transform Acoustic Coding), etc.

Each song data of an amount of one song (hereinafter, also simply referred to as song data) stored in the HDD 17 is added with attributes data on the artist, album, style, group, new track and bookmark, etc.

### [Gate Array 18]

The gate array 18 reads song data to be reproduced from the HDD 17 via the data transfer bus 51 and outputs the same to the decoder 22.

Also, the gate array 18 receives as an input a control signal from the USB control portion 12 via the control bus 53 and outputs the same to the microcomputer 26 via the control and data transfer bus 55.

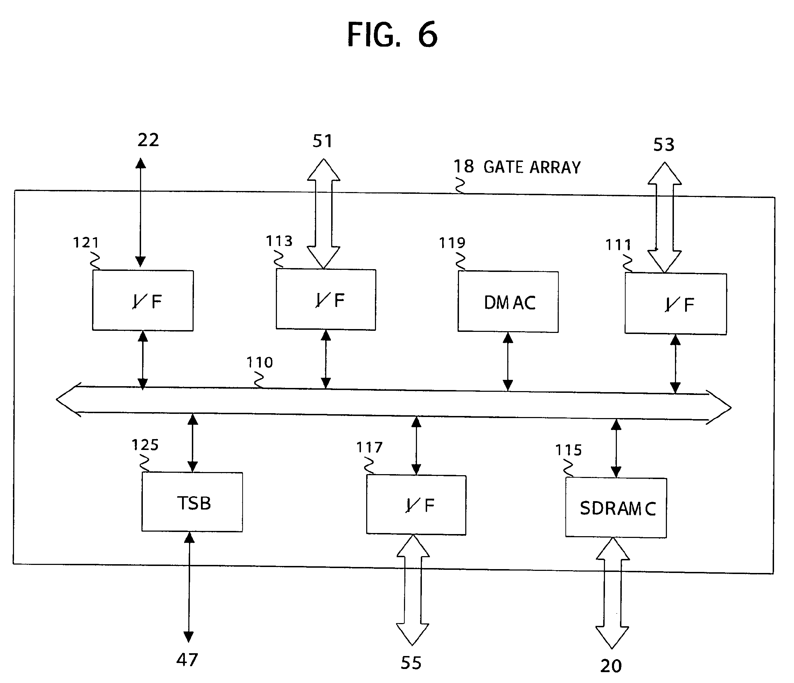

FIG. 6 is a view of the configuration of the gate array 18 shown in FIG. 2.

As shown in FIG. 6, the gate array 18 includes, for example, an interface 111, an interface 113, a control circuit SDRAMC 115, an interface 117, a DMAC 119, and interface 121 and the TSB 125 connected via a bus 110.

The gate array 18 performs, for example, processing of writing song data input from the personal computer 3 to the HDD 17 and processing of reading specified song data from the HDD 17. Consequently, a load of processing imposed on the microcomputer 26 can be reduced comparing with that in the case of the related art, where all of the above processing is performed by the microcomputer 26.

The interface 111 is connected to the control bus 53.

The interface 113 is connected to the data transfer bus 51.

The control circuit SDRAMC 115 temporarily stores in the SDRAM 20 song data input from the HDD 17 via the interface 113.

The interface 117 is connected to the control and data transfer bus 55.

The DMAC 119 integrally controls an operation of the gate array 18, which will be explained in the present embodiment.

The interface 121 outputs song data read from the SDRAM 20 to the decoder 22.

The TSB 125 receives as an input an operation signal generated by a not shown remote controller in response to an operation by a user via the remote controller terminal 47.

### [SDRAM 20]

The SDRAM 20 stores song data read from the HDD 17 by the gate array 18.

### [Decoder 22]

The decoder 22 decodes song data input from the gate array 18, generates a digital song signal, and outputs the same to the microcomputer 26.

The song data is encoded, for example, by the ATRAC as explained above, and the decoder 22 performs decoding corresponding to that.

Also, the decoder 22 performs surround processing and PCM (Pulse Code Modulation) conversion processing, etc. other than the decoding as above.

### [Flash Memory 24]

The flash memory 24 stores a program executed by the microcomputer 26.

### [Microcomputer 26]

The microcomputer 26 integrally controls an operation of the portable audio reproducing apparatus 1.

For example, in the case of writing song data input via the PC interface 10 to the HDD 17, the microcomputer 26 makes the USB control portion 12 to be in a driving state and makes the gate array 18 to be in a non-driving state.

Also, when reading song data from the HDD 17 and reproducing the same, the microcomputer 26 makes the USB control portion 12 to be in a non-driving state and makes the gate array 18 and the decode 22 to be in a driving state.

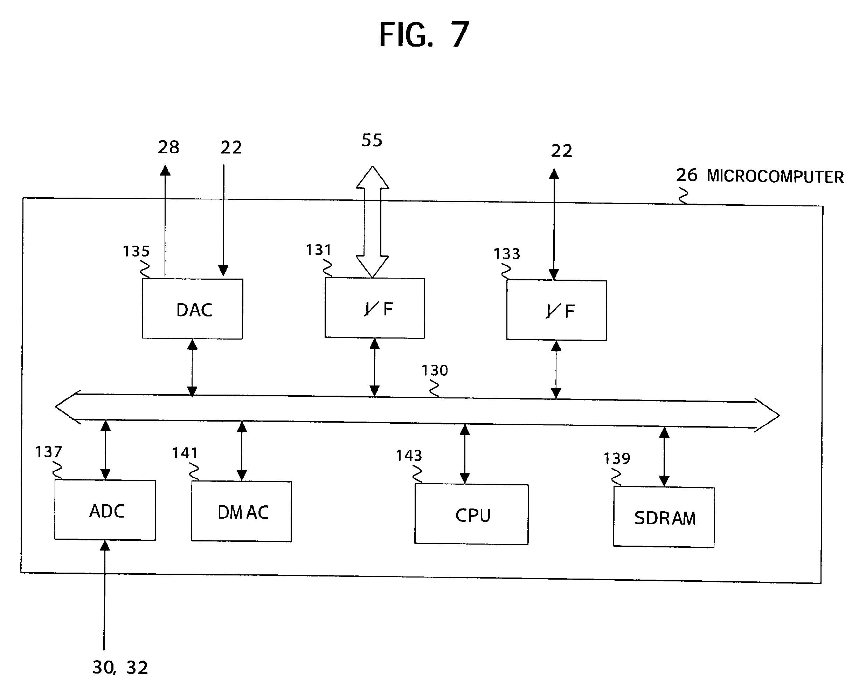

FIG. 7 is a view of the configuration of the microcomputer 26 shown in FIG. 2.

As shown in FIG. 7, the microcomputer 26 includes, for example, an interface 131, an interface 133, a DAC (Digital Analog Converter) 135, an ADC (Analog Digital Converter) 137, an SDRAM 139, a DMAC 141 and a CPU 143.

The interface 131 is connected to the control and data transfer bus 55.

The interface 133 is connected to the decoder 22, outputs a control signal to the decoder 22 and controls decoding processing by the decoder 22.

The DAC 135 converts the digital song signal input from the decoder 22 to an analog song signal and outputs the same to the amplifier 28.

The ADC 137 converts an analog operation signal input from the operation portion 30 and an analog sensor signal input from the G sensor respectively to a digital operation signal and a digital sensor signal, and outputs them to the CPU 143.

Note that the G sensor 32 detects acceleration of the portable audio reproducing apparatus 1 and outputs a G sensor signal indicating the detection result to the ADC 137.

FIG. 4A, FIG. 4B and FIG. 4C are a view from above, a view from front and a view from below of the portable audio reproducing apparatus 1, respectively.

In the present embodiment, the operation portion 30 includes, for example, a MENU key 64, a MODE key 65 and a VOLUME key 66 shown in FIG. 4A, a cross right key 67a, a cross left key 67b, a cross upper key 67c, a cross lower key 67d and a cross decision key 67e shown in FIG. 4B, and a HOLD key 68 shown in FIG. 4C.

The SDRAM 139 temporarily stores data to be processed by the CPU 143, such as codes of a program read from the flash memory 24.

The DMAC 141 controls an access to the HDD 17 by the gate array 18.

The CPU 143 calls up a program from the flash memory 24 via the interface 131 and the control and data transfer bus 55, and integrally controls processing of the microcomputer 26 based on the program.

The CPU 143 determines whether the portable audio reproducing apparatus 1 starts to drop or not, for example, based on the G sensor signal explained above, and performs processing of making a head of the HDD 17 receded when determined that it starts to drop.

Also, the CPU 143 monitors a data amount of song data stored in the SDRAM 20 and, when the data amount becomes a predetermined threshold value or smaller, makes the gate array 18 to restart reading of song data from the HDD 17.

### [Power Source 60]

The power source 60 supplies drive power to the respective components of the portable audio reproducing apparatus 1.

Note that the gate array 18, the decoder 22 and the microcomputer 26 shown in FIG. 2 operate based on a drive signal having a frequency of 22.5 MHz given from the oscillation circuit 57.

Also, the USB control portion 12 operates based on a drive signal having a frequency of 12 MHz given from the oscillation circuit 59.

Below, the configuration of the portable audio reproducing apparatus 1 of the present embodiment will be explained.

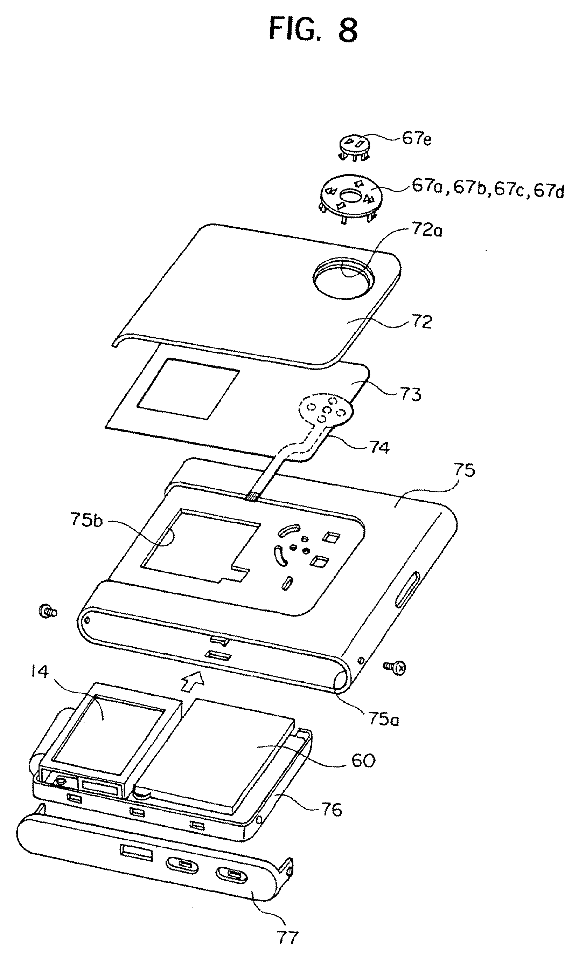

FIG. 8 is a disassembled perspective view of the portable audio reproducing apparatus 1 of the present embodiment.

Note that only a part of the portable audio reproducing apparatus 1 is shown in FIG. 8.

As shown in FIG. 8, in the portable audio reproducing apparatus 1, after the LCD 14 and the power source 60 are mounted on a body holder 76, the body holder 76 is placed inside a cabinet 75 from an opening portion 75a.

After that, a cap portion 77 is attached to the body holder 76 to close up the opening portion 75a.

Also, the cabinet 75 is formed with an opening portion 75b at a position corresponding to the LCD 14.

After this operation, an adhesive sheet 73 formed with an opening portion at a position corresponding to the LCD 14 is adhered to the cabinet 75.

After that, translucent or semi-translucent plate 72 is adhered to the adhesive sheet 73.

The plate 72 is formed with an opening portion 72a, where the cross right key 67a, cross left key 67b, cross upper key 67c, cross lower key 67d and cross decision key 67e fit in.

Note that, while not illustrated in FIG. 8, the body holder 76 is mounted with the HDD 17 shown in FIG. 2 and a circuit substrate besides the LCD 14 and the power source 60. On the circuit substrate, the USB control portion 12, the SDRAM 20, the decoder 22, the flash memory 24 and the microcomputer 26 shown in FIG. 2 are installed.

Below, operation examples of the portable audio reproducing apparatus 1 will be explained.

### [First Operation Example]

In this operation example, the case of downloading song data from the personal computer 3 to the portable audio reproducing apparatus 1 will be explained.

Note that when the portable audio reproducing apparatus 1 detects that the PC 3 is connected to the PC interface 10, it automatically downloads song data, which is not stored in the HDD 17, from song data stored in the PC 3.

First, the PC interface 10 of the portable audio reproducing apparatus 1 is connected to the personal computer 3 via the USB cable.

The personal computer 3 recognizes (detects) the portable audio reproducing apparatus 1 as a removable HDD.

Then, the personal computer 3 outputs song data to the PC interface 10.

The USB control portion 12 shown in FIG. 2 stores the song data in the SRAM 101 by the FIFO control circuit 107 shown in FIG. 3.

Continuously, the FIFO control circuit 107 writes the song data read from the SRAM 101 to the HDD 17 via the data transfer bus 51 in response to control by the IDE/DMA 105.

At this time, the FIFO control circuit 107 obtains right of use the data transfer bus 51 by arbitration, then, uses the data transfer bus 51.

The above operation is mainly controlled by the USB control portion 12, and the microcomputer 26 does not directly involve in the control.

As a result, a processing amount of the microcomputer 26 can be reduced, a microcomputer 26 having a lower operation frequency comparing with that of the related art can be used, and the power can be saved.

### [Second Operation Example]

In this operation example, the case of outputting a control signal from the personal computer 3 to the portable audio reproducing apparatus 1 will be explained.

First, the PC interface 10 of the portable audio reproducing apparatus 1 is connected to the personal computer 3 via a USB cable.

Then, the personal computer 3 outputs a control signal (command data) in response to a user operation to the PC interface 10.

The USB control portion 12 shown in FIG. 2 makes the FIFO control circuit 107 shown in FIG. 3 to store the operation signal in the SRAM 101.

After that, the microcomputer 26 reads the control signal from the SRAM 101 of the USB control portion 12 via the control and data transfer bus 55, the gate array 18 and the control bus 53.

At this time, the microcomputer 26 obtains right of use the control and data transfer bus 55 by arbitration, then, uses the control and data transfer bus 55. Also, the gate array 18 obtains right of use the control bus 53 by arbitration, then, uses the control bus 53.

Then, the microcomputer 26 performs predetermined processing based on the read control signal.

### [Third Operation Example]

In this operation example, the case of reproducing song data stored in the HDD 17 will be explained.

For example, the operation portion 30 (for example, the cross decision key 67e shown in FIG. 4) outputs a reproducing instruction in response to the user operation to the microcomputer 26.

Then, when receiving the reproducing instruction, the microcomputer 26 outputs a reproducing request specifying song data to be reproduced to the gate array 18 via the control and data transfer bus 55.

At this time, the microcomputer 26 obtains right of use the control and data transfer bus 55 by arbitration, then, uses the control and data transfer bus 55.

After that, the microcomputer 26 becomes free from the reproducing operation.

The gate array 18 shown in FIG. 6 receives as an input the reproducing request via the interface 117 and outputs the same to the DMAC 119.

The DMAC 119 accesses to the HDD 17 via the interface 113 and the data transfer bus 51 and reads song data relating to the above reproducing request.

At this time, the gate array 18 obtains right of use the data transfer bus 51 by arbitration, then, uses the data transfer bus 51.

The DMAC 119 of the gate array 18 writes the song data input from the HDD 17 via the interface 113 to the SDRAM 20 via the control circuit SDRAMC 115.

In parallel with the writing operation, the DMAC 119 reads song data from the SDRAM 20 via the control circuit SDRAMC 115 and outputs the same to the decoder 22 via the interface 121.

The decoder 22 decodes (reproduces) the input song data by the ATRAC and outputs a decoded digital song signal to the microcomputer 26.

Also, the decoder 22 notifies the microcomputer 26 of completion of the decoding.

The microcomputer 26 receives the decoded digital song signal by the DAC135 shown in FIG. 7, converts the same to an analog song signal in the DAC 135 and outputs to the amplifier 28.

Then, the analog song signal is amplified by the amplifier 28 and output to a headphone via the audio output terminal 46.

In the present operation example, processing from reading song data from the HDD 17 to outputting the same to the decoder 22 is controlled mainly by the gate array 18, and the microcomputer 26 does not directly involve in the control.

As a result, a processing amount of the microcomputer 26 can be reduced, a microcomputer 26 having a lower operation frequency comparing with that of the related art can be used, and the power can be saved.

### [Fourth Operation Example]

In this operation example, the case where the microcomputer 26 shown in FIG. 2 makes the LCD 14 to display a song select screen will be explained.

First, a song select screen D1 will be explained.

As the song select screen D1, a plurality of song select screens on a first layer are regulated, which are regulated with respect to each of the plurality of different attributes (attributes of song data) and display a plurality of items regulated by the attributes to select.

Also, as the song select screen D1, song select screens on second and lower layers are regulated for each of the song select screens on the first layer.

The song select screens on second and lower layers are regulated with respect to each item of the song select screens on its upper layer and has a plurality of items for classifying song data belonging to the item based on the attributes other than the above attributes corresponding to the items.

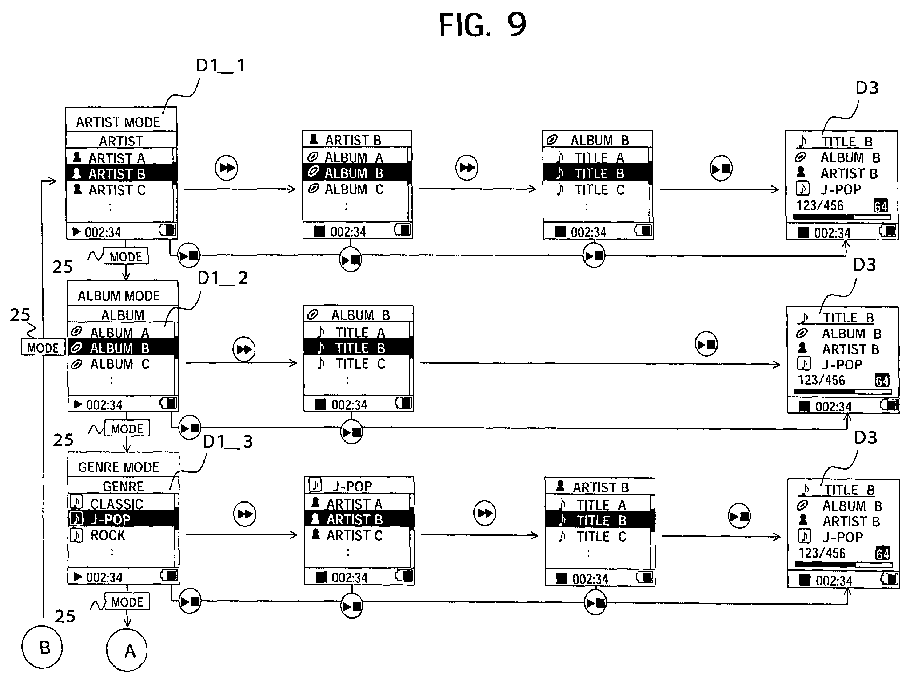

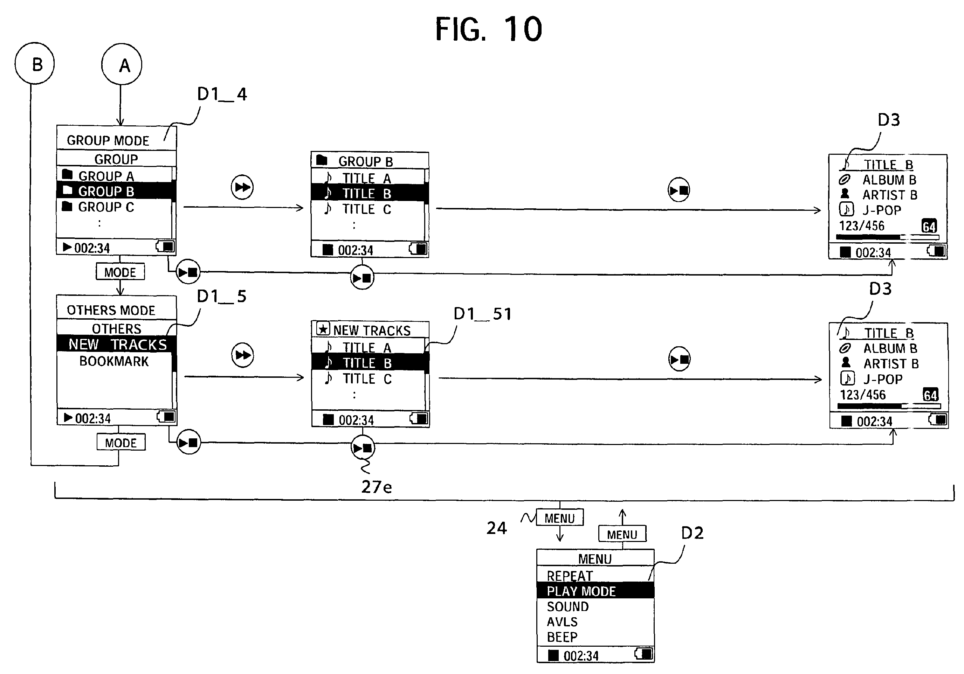

The song select screen D1 on the first layer is, for example, song select screens D1_1, D1_2, D1_3, D1_4 and D1_5 shown in FIG. 9 and FIG. 10.

Here, the song select screens D1_1, D1_2, D1_3, D1_4 and D1_5 are screens for displaying by classifying song data based on attributes thereof: an Artist, Album, Style, Group and Others, respectively.

For example, when a user presses the MODE key 65 shown in FIG. 4A in a state where the setting screen D2, etc. is displayed on the LCD panel 14, the microcomputer 26 shown in FIG. 1 displays the song select screen D1_1 shown in FIG. 9 on the LCD panel 14 based on an operation signal from the MODE key 65.

The song select screen D1_1 displays a plurality of items (artists A, B and C, etc.) for classifying the song data based on an attribute of artists.

At this time, the microcomputer 26 may display a song select screen on the first layer other than the song select screen D1_1 on the LCD panel 14.

Continuously, when the user presses the MODE key 65, the microcomputer 26 displays the song select screen D1_2 shown in FIG. 9 on the LCD panel 14 based on an operation signal from the MODE key 65.

The song select screen D1_2 displays a plurality of items (albums A, B and C, etc.) for classifying the song data based on an attribute of albums.

Continuously, when the user presses the MODE key 65, the microcomputer 26 displays the song select screen D1_3 shown in FIG. 9 on the LCD panel 14 based on an operation signal from the MODE key 65.

The song select screen D1_3 displays a plurality of items (CLASSIC, J-POP and ROCK, etc.) for classifying the song data based on an attribute of styles.

Continuously, when the user presses the MODE key 65, the microcomputer 26 displays the song select screen D1_4 shown in FIG. 10 on the LCD panel 14 based on an operation signal from the MODE key 65.

The song select screen D1_4 displays a plurality of items (groups A, B and C, etc.) for classifying the song data based on an attribute of groups regulated by the personal computer 3.

Continuously, when the user presses the MODE key 65, the microcomputer 26 displays the song select screen D1_5 shown in FIG. 10 on the LCD panel 14 based on an operation signal from the MODE key 65.

The song select screen D1_5 displays a plurality of items for classifying the song data based on other attributes, such as "New Tracks" indicating newly input tracks (song data) from the personal computer 3 and "Bookmark" indicating that a bookmark is put by the user.

Continuously, when the cross right key 67a is pressed on the song select screen D1_5, the microcomputer 26 displays the song select screen D1_51 showing titles of song data registered in the new song folder.

Continuously, when a cursor is moved vertically on the song select screen D1_51 to point a desired title and a cross decision key 67e is pressed, the microcomputer 26 displays a reproduction screen D3 of the title on the LCD panel 14 and reproduces the same.

As explained above, in the portable audio reproducing apparatus 1, as explained in the above first operation example, an operation of writing song data input from the personal computer 3 to the HDD 17 is controlled mainly by the USB control portion 12.

Also, in the portable audio reproducing apparatus 1, as explained in the above third operation example, processing of reading song data from the HDD 17 and outputting to the decoder 22 is controlled mainly by the gate array 18.

As a result, according to the portable audio reproducing apparatus 1, comparing with the case where both of the above processing are performed by the microcomputer as in the related art, a processing load imposed on the microcomputer 26 can be reduced. Therefore, according to the portable audio reproducing apparatus 1, a microcomputer 26 having a lower operation frequency comparing with that of the related art can be used, and the power can be saved.

Also, according to the portable audio reproducing apparatus 1, in the case of writing song data input via the PC interface 10 to the HDD 17, the decoder 22 and the gate array 18 are made to be in a non-driving state,
while in the case of reproducing song data read from the HDD 17, the USB control portion 12 is made to be in a non-driving state. Consequently, furthermore power saving can be attained.

Also, in the portable audio reproducing apparatus 1, the USB control portion 12, the HDD 17 and the gate array 18 are connected to the data transfer bus 51, and only one of the USB control portion 12 and the gate array 18 that obtained right of use the data transfer bus 51 by arbitration is capable of accessing to the HDD 17. Therefore, it is not necessary to provide interfaces respectively to the USB control portion 12 and the gate array 18 in the HDD 17, and the same configuration as that in the related art can be used.

The present invention is not limited to the above embodiment.

In the above embodiment, the case of applying the present invention to the portable audio reproducing apparatus was explained as an example, but the present invention can be also applied to personal computer and other apparatuses other than portable apparatuses.

Also, in the present invention, as a memory means for storing content data, instead of the HDD 17 shown in FIG. 2, an MD (registered trademark) and other magneto-optical recording media, a CD-R (CD-Recordable), DVD-R (DVD-Recordable) and other optical recording media, a memory stick (registered trademark), SD card (registered trademark) and other semiconductor memories may be used.

Also, in the above embodiment, audio data, such as song data, was explained as an example of content data of the present invention, but it may be image data, such as a video and picture.

Also, in the above embodiment, a portable audio reproducing apparatus 1 was explained as an example of an electronic apparatus of the present invention, but the electronic apparatus of the present invention may be, for example, a personal computer, an optical disk reproducing apparatus for a compact disk, etc., and a magneto-optical disk reproducing apparatus, etc.

The present invention can be applied to a system for storing input content data in a memory means, then decoding and outputting the same.

It should be understood by those skilled in the art that various modifications, combinations, subcombinations and alternations may occur depending on design requirements and other factors insofar as they are within the scope of the appended claims or the equivalents thereof.

## Claims

1. An electronic apparatus (1), comprising:
an interface (10) for receiving content data;
a memory means (17) connected to a data transfer bus (51), for storing said content data;
a first control circuit (12) for writing content data input via said interface (10) to said memory means (17) via said data transfer bus (51);
a reproduction circuit (22) for reproducing said content data;
a second control circuit (18) for reading said content data from said memory means (17) via said data transfer bus (51) and outputting to said reproduction circuit (22); and
a third control circuit (26) for performing outputting processing of said content data reproduced by said reproduction circuit (22).

2. An electronic apparatus (1) as set forth in claim 1, wherein:
after obtaining right of use said data transfer bus (51), said first control circuit (12) writes content data input via said interface to said memory means (17) via said data transfer bus (51); and
after obtaining right of use said data transfer bus, said second control circuit (18) connected to said data transfer bus (51) reads said content data from said memory means via said data transfer bus and outputs to said reproduction circuit.

3. An electronic apparatus (1) as set forth in claim 1 or 2,
wherein:
said first control circuit (12) outputs a control signal input from said interface to said second control circuit (18); and
said second control circuit (18) outputs said control signal input from said first control circuit (12) to said third control circuit (26).

4. An electronic apparatus (1) as set forth in claim 3, further comprising:
a display control circuit (16) for controlling a display means (14) for displaying a select screen of said content data, and a control bus (53) connected to said first control circuit (12) and said second control circuit (18);
wherein
after obtaining right of use said control bus (53), said first control circuit (12) outputs said control signal to said second control circuit (18) via said control bus.

5. An electronic apparatus (1) as set forth in one of the claims 1 to 4,
wherein said second control circuit (18) receives an operation signal from an operation portion and outputs the operation signal to said third control circuit (26).

6. An electronic apparatus (1) as set forth in claim 5, further comprising:
a memory (24) for storing a program executed by said third control circuit (26), and a control and data transfer bus connected to said second control circuit (18) and said third control circuit (26);
wherein said second control circuit (18) outputs said operation signal to said third control circuit (26) via said control and data transfer bus.

7. An electronic apparatus (1) as set forth in claim 5, comprising a display portion for displaying items based on attribute information of content data with respect to each layer corresponding to the attribute information;
wherein said third control circuit changes a layer of display on said display portion based on an operation signal from said operation portion, and controls said control circuit to reproduce the content data when receiving an operation signal for reproducing the content data

8. An electronic apparatus (1) as set forth in claim 7, wherein respective layers of said items are an album list, an artist list and a title list.

9. An electronic apparatus (1) as set forth in claim 1, wherein said third control circuit (26) converts said content data reproduced by said reproduction circuit to an analog signal and outputs the same.

10. An electronic apparatus (1) as set forth in one of the claims 1 to 9,
further comprising a power source for supplying power for driving said first control circuit, said reproduction circuit, said second control circuit and said third control circuit.

11. An electronic apparatus (1) as set forth in claim 1, as a portable reproducing apparatus.

12. An electronic apparatus (1), comprising:
an interface (10) for receiving content data;
a memory means (17) connected to a data transfer bus, for storing said content data;
a first control circuit (12) for writing content data input via said interface (10) to said memory means (17);
a reproduction circuit (22) for reproducing said content data;
a second control circuit (18) for reading said content data from said memory means (17) and outputting the same to said reproduction circuit (22); and
a third control circuit (26) for performing outputting processing of said content data reproduced by said reproduction circuit (22);
wherein
said third control circuit (26) makes said first control circuit (12) to be in a driving state and makes said second control circuit (18) to be in a non-driving state when receiving said content data via said interface, and makes said reproduction circuit and said second control circuit to be in a driving state and makes said first control circuit to be in a non-driving state when reading content data from said memory means and reproducing the same.
